# EUROPÄISCHE PATENTSCHRIFT

(11) **EP 1 485 644 B1**
(45) Veröffentlichungstag und Bekanntmachung des Hinweises auf die Patenterteilung: **20.12.2006**
(21) Anmeldenummer: 03720138.1
(22) Anmeldetag: 28.02.2003
(51) Int. Cl.: F16H 61/12, F16H 61/688

(54) **DOPPELKUPPLUNGSGETRIEBE UND VERFAHREN ZUM STEUERN VON WENIGSTENS ZWEI KUPPLUNGEN BEI DOPPELKUPPLUNGSGETRIEBE EINES FAHRZEUGES**
TWIN-CLUTCH GEARBOX AND METHOD FOR CONTROLLING AT LEAST TWO CLUTCHES IN A TWIN-CLUTCH GEARBOX OF A MOTOR VEHICLE
BOITE DE VITESSES A DOUBLE EMBRAYAGE ET PROCEDE DE COMMANDE D'AU MOINS DEUX EMBRAYAGES DANS LA BOITE DE VITESSES A DOUBLE EMBRAYAGE D'UN VEHICULE A MOTEUR

(30) Priorität: 07.03.2002 DE 10209917
(43) Veröffentlichungstag der Anmeldung: 15.12.2004
(73) Patentinhaber: LuK Lamellen und Kupplungsbau Beteiligungs KG, 77815 Bühl (DE)
(72) Erfinder: BERGER, Reinhard, 77815 Bühl (DE); WUHRER, Alexander, 77815 Bühl (DE)
(86) Internationale Anmeldenummer: PCT/DE2003/000646
(87) Internationale Veröffentlichungsnummer: WO 2003/074909

(56) Entgegenhaltungen:
- DE-A- 19 936 886
- PATENT ABSTRACTS OF JAPAN vol. 007, no. 269 (M-259), 30. November 1983 (1983-11-30) & JP 58 146749 A (TOYO KOGYO KK), 1. September 1983 (1983-09-01)
- PATENT ABSTRACTS OF JAPAN vol. 008, no. 210 (M-328), 26. September 1984 (1984-09-26) & JP 59 097349 A (AISHIN SEIKI KK;OTHERS: 01), 5. Juni 1984 (1984-06-05)

## Beschreibung

Die vorliegende Erfindung betrifft ein Doppelkupplungsgetriebe und ein Verfahren zum Steuern von wenigstens zwei Kupplungen bei einem Doppelkupplungsgetriebe eines Fahrzeuges.

Aus der Fahrzeugtechnik sind Doppelkupplungsgetriebe, insbesondere Parallelschaltgetriebe, und Verfahren zum Steuern der Kupplungen dieser Getriebesysteme bekannt. Bei den bekannten Doppelkupplungsgetrieben ist nach dem Abschalten der Getriebesteuerung des Fahrzeuges zumindest eine Kupplung geschlossen. Auch bei einem Notlauf bzw. bei einem Systemfehler, wie z. B. einem Ausfall der Getriebesteuerung, bleibt die Kupplung in einem geschlossenen Zustand. Die hat insbesondere den Nachteil, dass das Fahrzeug danach nicht ohne weiteres, z. B. zum Abschleppen, bewegt werden kann.

Weiterhin kann eine sicherheitsrelevante Situation eintreten, wenn beide Kupplungen gleichzeitig schließen. Die DE 199 36 886 A1 zeigt eine Doppelkupplung für ein Doppelkupplungsgetriebe, bei der die Stellungen der beiden Kupplungen mittels einer Sensoreinheit erfasst und miteinander verglichen werden, wobei ein für die Sicherheit des Fahrzeugs bedrohlicher Zustand erkannt wird, wenn beide Kupplungen geschlossen werden.

Demnach liegt der vorliegenden Erfindung die Aufgabe zugrunde, ein Doppelkupplungsgetriebe und ein Verfahren zum Steuern von wenigstens zwei Kupplungen bei einem Doppelkupplungsgetriebe eines Fahrzeuges vorzuschlagen, welche eine Möglichkeit zum Notöffnen der Kupplungen realisieren.

Diese Aufgabe wird verfahrensmäßig durch ein Verfahren zum Steuern von wenigstens zwei Kupplungen bei einem Doppelkupplungsgetriebe eines Fahrzeuges gelöst, bei dem zumindest eine Kupplung über wenigstens ein Notlaufventil geöffnet wird.

Durch das erfindungsgemäße Verfahren wird eine Möglichkeit gegeben, bei Bedarf eine oder vorzugsweise mehrere Kupplungen bei einem Doppelkupplungsgetriebe oder einem Parallelschaltgetriebe zu öffnen. Beispielsweise nach dem Abschalten der Getriebesteuerung bzw. nach dem Abstellen des Fahrzeuges oder dergleichen kann ein generelles Öffnen der Kupplungen durch das erfindungsgemäße Verfahren realisiert werden.

Gemäß einer Weiterbildung kann vorzugsweise bei einer elektromotorischen Kupplungsaktorik ein Notlaufventil an einem hydrostatischen Ausrücksystem jeder Kupplung angeschlossen sein. Durch das Öffnen des Notlaufventils oder durch das Öffnen mehrerer Notlaufventile, beispielsweise wenn ein Notlaufventil pro Kupplung vorgesehen ist, kann z. B. das Fluid aus dem Druckraum des hydrostatischen Ausrücksystems in einen drucklosen Raum, beispielsweise in einen Vorratsbehälter oder dergleichen, entweichen, sodass die Kupplungen danach kraftfrei geöffnet werden können.

Es ist auch denkbar, dass zumindest ein an die Zündung angeschlossenes Notlaufventil parallel zum Getriebesteuergerät geschaltet wird, wobei das Notlaufventil bei eingeschalteter Zündung aktiv geschlossen und bei ausgeschalteter Zündung geöffnet wird. Somit kann mit dem erfindungsgemäßen Verfahren eine generelle Öffnung der Kupplungen bei dem Doppelkupplungsgetriebe oder Parallelschaltgetriebe realisiert werden.

Im Rahmen einer vorteilhaften Ausgestaltung kann bei dem erfindungsgemäßen Verfahren vorgesehen sein, dass zumindest eine der Kupplungen bei der Detektion eines Systemfehlers über wenigstens ein Notlaufventil geöffnet wird. Somit wird in Abhängigkeit eines auftretenden Systemfehlers eine Notöffnung vorzugsweise beider Kupplungen des Doppelkupplungsgetriebes realisiert.

Als Systemfehler können beliebige vorbestimmte zu definierende Fehler verwendet werden. Vorzugsweise kann bei einem Ausfall eines Kupplungsaktors und/oder bei einem Ausfall des Prozessors eines Getriebesteuergeräts und/oder bei einer Aktivierung eines Abwürgeschutzes für den Motor und/oder bei einem Abschalten des Getriebesteuergerätes und/oder bei einem Ausfall der Stromversorgung des Getriebesteuergerätes ein Systemfehler detektiert werden.

Eine Weiterbildung der Erfindung kann vorsehen, dass zumindest ein z. B. in Reihe an das Getriebesteuergerät angeschlossenes Notlaufventil verwendet wird, welches im Normalbetrieb des Getriebesteuergerätes aktiv geschlossen ist und welches bei der Detektion eines definierten Systemfehlers automatisch geöffnet wird.

Besonders vorteilhaft ist es, wenn z. B. jedes Notlaufventil zumindest mechanisch oder dergleichen betätigbar ist, sodass ein manuelles Notöffnen jeder Kupplung möglich ist, um beispielsweise ein Abschleppen des Fahrzeuges durchführen zu können. Es ist denkbar, dass eine ausschließliche mechanische Betätigung oder auch eine zusätzlich elektrische Ansteuerung jedes Notlaufventils vorgesehen wird.

Das erfindungsgemäße Verfahren kann sowohl durch die Bauart und durch die Betätigungs- bzw. Ansteuerungsart jedes Notlaufventils entsprechend modifiziert werden. Beispielsweise kann zu Beginn des Verfahrens geprüft werden, ob die Getriebesteuerung oder dergleichen aktiviert ist. Bei aktivierter Getriebesteuerung kann dann geprüft werden, ob ein Systemfehler detektiert bzw. erkannt wird. Wenn dies der Fall ist, werden die Notlaufventile der beiden Kupplungen geöffnet oder bei nicht erkanntem Systemfehler geschlossen. Somit wird mit dem erfindungsgemäßen Verfahren eine Notöffnung in Abhängigkeit von der Detektion eines Systemfehlers durchgeführt.

Das erfindungsgemäß vorgeschlagene Verfahren kann insbesondere bei Parallelschaltgetriebe vorteilhaft eingesetzt werden, da dort, anders als bei einem sogenannten add-on automatisierten Schaltgetriebe, die Wegrollsicherung nicht durch eine Parksperre gewährleistet wird, und somit ein Öffnen der Kupplung in dieser Situation nicht sicherheitskritisch ist. Es ist auch möglich, dass das vorgeschlagene Verfahren bei einem elektronischen Kupplungsmanagement-System eingesetzt wird.

Ferner kann die der Erfindung zugrundeliegende Aufgabe vorrichtungsmäßig durch ein Doppelkupplungsgetriebe eines Fahrzeuges mit zumindest zwei Kupplungen, welche zumindest über ein Ausrücksystem von wenigstens einem Kupplungsaktor betätigt werden, insbesondere zum Durchführen des vorgeschlagenen Verfahrens, gelöst werden, wobei zum Öffnen zumindest einer Kupplung wenigstens ein Notlaufventil vorgesehen ist.

Demnach wird ein Doppelkupplungsgetriebe oder dergleichen vorgeschlagen, bei dem bei Bedarf vorzugsweise beide Kupplungen geöffnet werden können, um das Fahrzeug ohne weiteres auch nach dem Abschalten der Getriebesteuerung bewegen zu können.

Eine Weiterbildung der Erfindung kann vorsehen, dass bei der Verwendung einer elektromotorischen Kupplungsaktorik oder dergleichen ein Notlaufventil an ein hydrostatisches Ausrücksystem jeder Kupplung angeschlossen wird, sodass beim Öffnen des Notlaufventils die jeweils zugeordnete Kupplung kraftfrei ist und somit geöffnet wird.

Besonders vorteilhaft ist die Verwendung eines Notlaufventils, welches im nicht bestromten Zustand geöffnet ist. Dies bedeutet, dass das Notlaufventil im normalen Betriebszustand bestromt wird und somit geschlossen ist. Wenn die Getriebesteuerung abgeschaltet wird, kann das z. B. mit der Getriebesteuerung verbundene Notlaufventil automatisch geöffnet werden.

Im Rahmen einer weiteren Ausgestaltung der Erfindung kann das an die Zündung bzw. an das Zündschloss angeschlossene Notlaufventil auch z. B. parallel zum Getriebesteuergerät geschaltet werden, sodass das Notlaufventil bei eingeschalteter Zündung aktiv geschlossen ist und bei ausgeschalteter Zündung automatisch geöffnet wird.

Es ist auch möglich, dass bei dem erfindungsgemäßen Doppelkupplungsgetriebe andere beliebige Verbindungen zwischen der Getriebesteuerung und dem jeweiligen Notlaufventil realisiert werden.

Eine weitere Variante der Erfindung kann vorsehen, dass das Notlaufventil mit dem Getriebesteuergerät derart elektrisch verbunden ist, dass das Notlaufventil im Normalbetrieb des Getriebesteuergerätes aktiv geschlossen ist und bei der Detektion eines Systemfehlers automatisch geöffnet wird. Auf diese Weise kann mit dem erfindungsgemäßen Getriebesystem eine Notöffnung der vorgesehenen Kupplungen in Abhängigkeit eines detektierten Systemfehlers realisiert werden.

Erfindungsgemäß kann das Doppelkupplungsgetriebe ein zumindest mechanisch betätigtes Notlaufventil zum manuellen Öffnen der Kupplung aufweisen, um beispielsweise das Abschleppen eines defekten Fahrzeuges zu ermöglichen. Es ist auch möglich, dass jedes Notlaufventil zusätzlich oder auch nur eine elektrische Betätigung aufweist.

Gemäß einer Weiterbildung der Erfindung kann das erfindungsgemäße Getriebesystem vorzugsweise eine Trocken-Doppelkupplung mit zugedrückten, kraftfrei geöffneten Kupplungen aufweisen, welche jeweils mit einen elektromotorischen Kupplungsaktor über ein hydrostatisches Ausrücksystem betätigt werden. Es ist auch denkbar, dass ein anderes Betätigungssystem für die Kupplungen verwendet wird.

Weitere Vorteile und vorteilhafte Ausgestaltungen ergeben sich aus den Unteransprüchen und den nachfolgend beschriebenen Zeichnungen.
Es zeigen:
- Figur 1: ein Flussdiagramm eines möglichen Ausführungsbeispiels des erfindungsgemäßen Verfahrens;
- Figur 2: eine schematische Teilansicht eines erfindungsgemäßen Doppelkupplungsgetriebes;
- Figur 3: ein erstes Ausführungsbeispiel der Anordnung eines Notlaufventils bei dem erfindungsgemäßen Doppelkupplungsgetriebe; und
- Figur 4: ein zweites Ausführungsbeispiel der Anordnung des Notlaufventils bei dem erfindungsgemäßen Doppelkupplungsgetriebe.

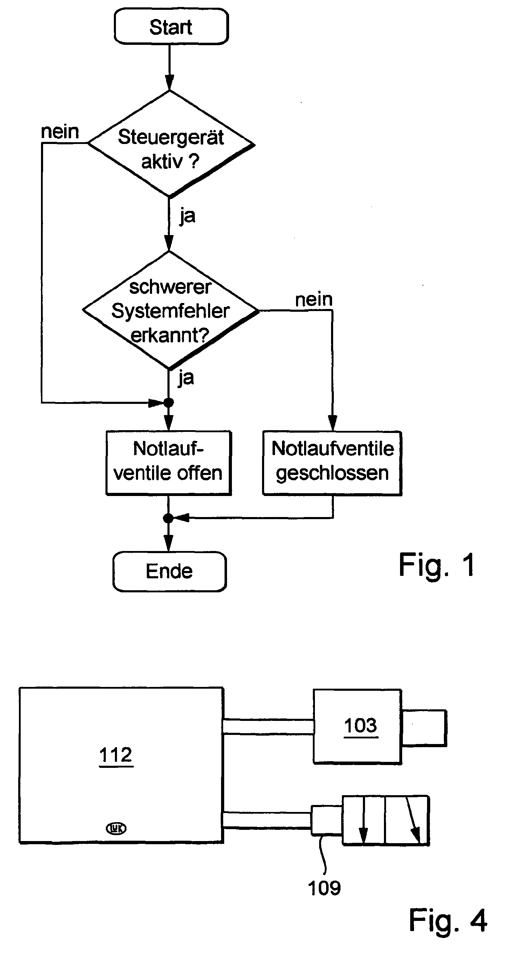

In Figur 1 ist ein Flussdiagramm eines möglichen Ausführungsbeispiels des erfindungsgemäßen Verfahrens dargestellt.

Zu Beginn des vorgeschlagenen Verfahrens wird geprüft, ob das Getriebesteuergerät 112 aktiviert ist. Bei aktiviertem Getriebesteuergerät 112 kann dann geprüft werden, ob ein Systemfehler detektiert bzw. erkannt worden ist. Wenn dies der Fall ist, können die vorhandenen Notlaufventile 109, 110 der beiden Kupplungen 101, 102 geöffnet werden. Sollte kein Systemfehler erkannt worden sein, bleiben bzw. werden die Notlaufventile 109, 110 geschlossen. Danach wird das Verfahren beendet. Somit wird bei dieser Variante des erfindungsgemäßen Verfahrens eine Notöffnung in Abhängigkeit von der Detektion eines Systemfehlers durchgeführt.

Eine weitere Variante der Erfindung, welche ebenfalls in Figur 1 angedeutet ist, sieht vor, dass bei nicht aktiviertem bzw. ausgeschaltetem Getriebesteuergerät 112 die Notlaufventile 109, 110 geöffnet werden. Dies bedeutet, dass die Kupplungen 101, 102. unabhängig von Systemfehlern geöffnet werden.

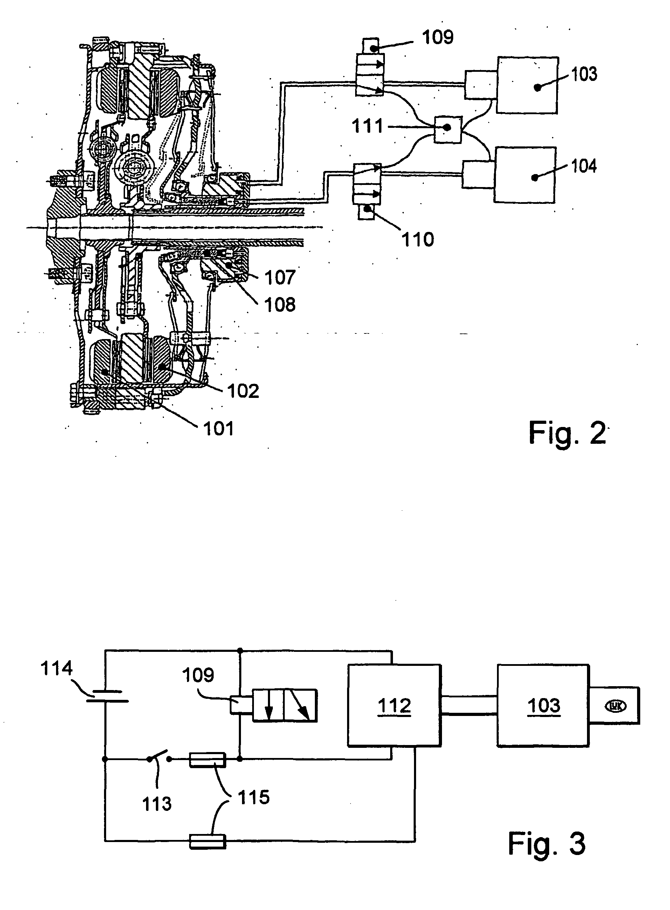

In Figur 2 ist eine schematische Teilansicht eines erfindungsgemäßen Doppelkupplungsgetriebes dargestellt. Das automatisierte Doppelkupplungssystem besteht insbesondere aus einer Trocken-Doppelkupplung, welche zwei zugedrückte, kraftfrei geöffnete Kupplungen 101, 102 umfasst. Die Kupplungen 101, 102 werden jeweils mit einem elektromotorischen Kupplungsaktor 103, 104 betätigt, welcher jeweils über ein hydrostatisches Ausrücksystem 105, 106 auf einen Ausrücker 107, 108 zum Betätigen der jeweiligen Kupplung 101, 102 wirkt.

Erfindungsgemäß weist jedes hydrostatisches Ausrücksystem 105, 106 ein Notlaufventil 109, 110 auf. Durch das Öffnen der beiden Notlaufventile 109, 110 kann das Fluid jeweils aus dem Druckraum der hydrostatischen Ausrücksysteme 105, 106 in einen drucklosen Ausgleichsbehälter 111 entweichen, sodass die Kupplungen 101, 102 kraftfrei geöffnet werden können.

In den Figuren 3 und 4 sind ein erstes und ein zweites Ausführungsbeispiel der Anordnung der Notlaufventile 109,110 bei dem erfindungsgemäßen Doppelkupplungsgetriebe dargestellt, wobei jeweils nur ein Notlaufventil 109 gezeigt ist.

In Figur 3 ist das Notlaufventil 109 parallel zum Getriebesteuergerät 112 angeordnet, wobei das Notlaufventil 109 derart elektrisch mit der Zündung bzw. dem Zündschloss 113 verbunden ist, dass das Notlaufventil 109 bei eingeschalteter Zündung 113 aktiv geschlossen und bei ausgeschalteter Zündung 113 geöffnet ist.

In Figur 4 ist das Notlaufventil 109 mit dem Getriebesteuergerät 112 in Reihe geschaltet. Bei diesem zweiten Ausführungsbeispiel wird das Notlaufventil 109 über das Getriebesteuergerät 112 angesteuert. Dabei ist das Notlaufventil 109 im Betrieb des Getriebesteuergerätes 112 aktiv geschlossen, und bei der Abschaltung des Getriebesteuergerätes 112 bzw. beim Ausfall der Stromversorgung des Getriebesteuergerätes 112 grundsätzlich automatisch geöffnet. Ferner ist in Figur 4 die Batterie des Fahrzeuges mit 114 und die Sicherungen mit 115 bezeichnet.

Die vorgenannten Varianten bezüglich der Anordnung und der Betätigung der Notlaufventile 109, 110 können auch noch geeignet modifiziert und/oder beliebig miteinander kombiniert werden.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombinationen zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Verfahren zum Steuern von wenigstens zwei Kupplungen bei einem Doppelkupplungsgetriebe eines Fahrzeuges, bei dem zumindest eine Kupplung über wenigstens ein Notlaufventil geöffnet wird , **dadurch gekennzeichnet, dass** bei einer elektromotorischen Kupplungsaktorik ein Notlaufventil an ein hydrostatisches Ausrücksystem jeder Kupplung angeschlossen wird, sodass beim Öffnen des Notlaufventils die jeweils zugeordnete Kupplung kraftfrei geöffnet wird.

2. Verfahren nach Anspruch 1 , **dadurch gekennzeichnet, dass** zumindest ein an das Zündschloss angeschlossenes Notlaufventil parallel zum Getriebesteuergerät geschaltet wird, wobei das Notlaufventil bei eingeschaltetem Zündschloss aktiv geschlossen und bei ausgeschaltetem Zündschloss geöffnet wird.

3. Verfahren nach einem der vorangehenden Ansprüche, **dadurch gekennzeichnet, dass** zumindest eine der Kupplungen bei einer Detektion eines Systemfehlers über wenigstens ein Notlaufventil geöffnet wird.

4. Verfahren nach Anspruch 3, **dadurch gekennzeichnet, dass** ein Systemfehler bei einem Ausfall eines Kupplungsaktors und/oder bei einem Ausfall des Prozessors eines Getriebesteuergeräts und/oder bei einer Aktivierung eines Abwürgeschutzes für den Motor und/oder bei einem Abschalten des Getriebesteuergerätes und/oder bei einem Ausfall der Stromversorgung des Getriebesteuergerätes detektiert wird.

5. Verfahren nach Anspruch 3 oder 4, **dadurch gekennzeichnet, dass** zumindest ein an das Getriebesteuergerät angeschlossenes Notlaufventil verwendet wird, welches im Normalbetrieb des Getriebesteuergerätes aktiv geschlossen wird und welches bei der Detektion eines Systemfehlers automatisch geöffnet wird.

6. Verfahren nach einem der vorangehenden Ansprüche, **dadurch gekennzeichnet, dass** jedes Notlaufventil zumindest mechanisch betätigt wird, sodass ein manuelles Öffnen jeder Kupplung ermöglicht wird.

7. Verfahren nach einem der vorangehenden Ansprüche, **dadurch gekennzeichnet, dass** jedes Notlaufventil zumindest elektrisch betätigt wird, sodass ein manuelles Öffnen jeder Kupplung ermöglicht wird.

8. Verfahren nach einem der vorangehenden Ansprüche, **dadurch gekennzeichnet, dass** zu Beginn geprüft wird, ob das Getriebesteuergerät aktiviert ist, dass bei aktiviertem Getriebesteuergerät geprüft wird, ob ein Systemfehler vorliegt, und dass bei vorliegendem Systemfehler die Notlaufventile der beiden Kupplungen geöffnet werden.

9. Verfahren nach Anspruch 8, **dadurch gekennzeichnet, dass** bei abgeschaltetem Getriebesteuergerät unabhängig von der Detektion eines Systemfehlers die Notventile der beiden Kupplungen geöffnet werden.

10. Verfahren nach Anspruch 8, **dadurch gekennzeichnet, dass** bei aktiviertem Getriebesteuergerät und beim Vorliegen keines Systemfehlers die Notlaufventile der beiden Kupplungen geschlossen werden.

11. Doppelkupplungsgetriebe eines Fahrzeuges mit zumindest zwei Kupplungen, welche zumindest über ein Ausrücksystem von wenigstens einem Kupplungsaktor betätigt werden, insbesondere zum Durchführen des Verfahrens nach einem der Ansprüche 1 bis 10, wobei zum Öffnen zumindest einer Kupplung ein Notlaufventil vorgesehen ist, **dadurch gekennzeichnet, dass** bei der Verwendung einer elektromotorischen Kupplungsaktorik ein Notlaufventil an einem hydrostatischen Ausrücksystem jeder Kupplung angeschlossen ist, sodass beim Öffnen des Notlaufventils die jeweils zugeordnete Kupplung kraftfrei geöffnet wird.

12. Doppelkupplungsgetriebe nach Anspruch 12, **dadurch gekennzeichnet, dass** als Notlaufventil ein Ventil vorgesehen ist; welches im nicht bestromten Zustand geöffnet ist.

13. Doppelkupplungsgetriebe nach einem der Ansprüche 11 oder 12, **dadurch gekennzeichnet, dass** das Notlaufventil mit dem Zündschloss derart elektrisch verbunden ist, dass das Notlaufventil bei eingeschaltetem Zündschloss aktiv geschlossen und bei ausgeschaltetem Zündschloss geöffnet ist.

14. Doppelkupplungsgetriebe nach einem der Ansprüche 11 bis 13, **dadurch gekennzeichnet, dass** das Notlaufventil mit dem Getriebesteuergerät derart elektrisch verbunden ist, dass das Notlaufventil im Betrieb des Getriebesteuergerätes aktiv geschlossen ist und bei der Detektion eines Systemfehlers automatisch geöffnet wird.

15. Doppelkupplungsgetriebe nach einem der Ansprüche 11 bis 14, **dadurch gekennzeichnet, dass** ein zumindest mechanisch betätigtes Notlaufventil zum manuellen Öffnen der Kupplung vorgesehen ist.

16. Doppelkupplungsgetriebe nach einem der Ansprüche 11 bis 15, **dadurch gekennzeichnet, dass** zumindest ein elektrisch betätigtes Notlaufventil zum manuellen Öffnen der Kupplung vorgesehen ist.

17. Doppelkupplungsgetriebe nach einem der Ansprüche 11 bis 16, **dadurch gekennzeichnet, dass** eine Trocken-Doppelkupplung mit zugedrückten, kraftfrei geöffneten Kupplungen vorgesehen ist.

## Claims

1. A method for controlling at least two clutches in a dual clutch transmission of a vehicle, in which at least one clutch is disengaged by means of at least one emergency operation valve, **characterized in that** in an electric motor clutch actuator an emergency operation valve is connected to a hydrostatic disengagement system of each clutch, so that when the emergency operation valve is opened the corresponding clutch is disengaged with zero force.

2. The method according to Claim 1, **characterized in that** at least one emergency operation valve connected to the ignition lock is wired parallel to the transmission controller, the emergency operation valve being actively closed when the ignition lock is switched on, and opened when the ignition lock is switched off.

3. A method according to one of the preceding claims, **characterized in that** at least one of the clutches is opened via at least one emergency operation valve when a system error is detected.

4. The method according to Claim 3, **characterized in that** a system error is detected when a clutch actuator fails and/or when the processor of a transmission controller fails and/or when stall protection for the engine is activated and/or when the transmission controller is switched off and/or when the power supply for the transmission controller is detected.

5. The method according to Claim 3 or 4, **characterized in that** at least one emergency operation valve connected to the transmission controller is used, which is actively closed in normal operation of the transmission controller and which is automatically opened when a system error is detected.

6. A method according to one of the preceding claims, **characterized in that** each emergency operation valve is operated at least mechanically, so that manual disengagement of each clutch is made possible.

7. A method according to one of the preceding claims, **characterized in that** each emergency operation valve is operated at least electrically, so that manual disengagement of each clutch is made possible.

8. A method according to one of the preceding claims, **characterized in that** at the beginning a check is performed to determine whether the transmission controller is activated; if the transmission controller is activated a check is performed to determine whether a system error is present; and if a system error is present the emergency valves for both clutches are opened.

9. The method according to Claim 8, **characterized in that** if the transmission controller is switched off the emergency valves of the two clutches are opened, independent of the detection of a system error.

10. The method according to Claim 8, **characterized in that** if the transmission controller is activated and if a system error is present the emergency operation valves of the two clutches are closed.

11. A dual clutch transmission of a vehicle, having at least two clutches which are operated at least via a disengagement system of at least one clutch actuator, in particular to carry out the method according to one of Claims 1 or 10, there being at least one emergency operation valve provided to disengage at least one clutch, **characterized in that** when an electric motor clutch actuator is used an emergency operation valve is connected to a hydrostatic disengagement system of each clutch, so that when the emergency operation valve is opened the corresponding clutch is disengaged with zero force.

12. The dual clutch transmission according to Claim 11, **characterized in that** the emergency operation valve provided is a valve which is open when no electric current is present.

13. The dual clutch transmission according to one of Claims 11 or 12, **characterized in that** the emergency operation valve is electrically connected to the ignition lock in such a way that the emergency operation valve is actively closed when the ignition lock is switched on and open when the ignition lock is switched off.

14. The dual clutch transmission according to one of Claims 11 through 13,
**characterized in that** the emergency operation valve is electrically connected to the transmission controller in such a way that the emergency operation valve is actively closed when the transmission controller is in operation and is automatically opened when a system error is detected.

15. The dual clutch transmission according to one of Claims 11 through 14, **characterized in that** an at least mechanically operated emergency operation valve is provided for manually disengaging the clutch.

16. The dual clutch transmission according to one of Claims 11 through 15, **characterized in that** at least one electrically operated emergency operation valve is provided for manually disengaging the clutch.

17. The dual clutch transmission according to one of Claims 11 through 16, **characterized in that** a dry dual clutch having pressure-engaged, zero-force-disengaged clutches is provided.

## Revendications

1. Procédé de commande d'au moins deux embrayages concernant une boîte de vitesses à double embrayage d'un véhicule, procédé dans lequel au moins un embrayage est ouvert par au moins une soupape fonctionnant en mode dégradé, **caractérisé en ce que** dans le cas d'actionneurs d'embrayage électromoteurs, une soupape fonctionnant en mode dégradé est raccordée à un système de débrayage hydrostatique de chaque embrayage, de sorte que lors de l'ouverture de la soupape fonctionnant en mode dégradé, l'embrayage respectivement associé soit ouvert avec une force nulle.

2. Procédé selon la revendication 1, **caractérisé en ce que** au moins une soupape fonctionnant en mode dégradé, raccordée à la serrure de contact d'allumage, est couplée en parallèle au calculateur électronique de la boîte de vitesses, où la soupape fonctionnant en mode dégradé est fermée de façon active lorsque la serrure de contact d'allumage est enclenchée et ouverte lorsque la serrure de contact d'allumage n'est pas enclenchée.

3. Procédé selon l'une ou l'autre des revendications précédentes, **caractérisé en ce que** au moins l'un des embrayages, lors d'une détection d'un défaut du système, est ouvert par au moins une soupape fonctionnant en mode dégradé.

4. Procédé selon la revendication 3, **caractérisé en ce qu'**un défaut du système est détecté dans le cas d'une panne d'un actionneur d'embrayage et/ou dans le cas d'une panne du processeur d'un calculateur électronique de la boîte de vitesses et/ou dans le cas d'une activation d'une protection empêchant le moteur de caler et/ou dans le cas d'un arrêt du calculateur électronique de la boîte de vitesses et/ou dans le cas d'une panne de l'alimentation en courant du calculateur électronique de la boîte de vitesses.

5. Procédé selon la revendication 3 ou 4, **caractérisé en ce que** au moins une soupape fonctionnant en mode dégradé, raccordée au calculateur électronique de la boîte de vitesses, est utilisée, soupape fonctionnant en mode dégradé qui est fermée de façon active en cas de fonctionnement normal du calculateur électronique de la boîte de vitesses et qui est ouverte automatiquement lors de la détection d'un défaut du système.

6. Procédé selon l'une quelconque des revendications précédentes, **caractérisé en ce que** chaque soupape fonctionnant en mode dégradé est actionnée au moins mécaniquement, de sorte qu'une ouverture manuelle de chaque embrayage est rendue possible.

7. Procédé selon l'une quelconque des revendications précédentes, **caractérisé en ce que** chaque soupape fonctionnant en mode dégradé est actionnée au moins électriquement, de sorte qu'une ouverture manuelle de chaque embrayage est rendue possible.

8. Procédé selon l'une quelconque des revendications précédentes, **caractérisé en ce que** l'on contrôle, au début, si le calculateur électronique de la boîte de vitesses est activé, que l'on contrôle, lorsque le calculateur électronique de la boîte de vitesses est activé, s'il y a un défaut du système, et **en ce que** les soupapes des deux embrayages, fonctionnant en mode dégradé, sont ouvertes lorsqu'il y a un défaut du système.

9. Procédé selon la revendication 8, **caractérisé en ce que** les soupapes des deux embrayages, fonctionnant en mode dégradé, sont ouvertes lorsque le calculateur électronique de la boîte de vitesses est arrêté, indépendamment de la détection d'un défaut du système.

10. Procédé selon la revendication 8, **caractérisé en ce que** les soupapes des deux embrayages, fonctionnant en mode dégradé, sont fermées lorsque le calculateur électronique de la boîte de vitesses est activé et qu'il n'y a aucun défaut du système.

11. Boîte de vitesses à double embrayage d'un véhicule, comprenant au moins deux embrayages qui sont actionnés par au moins un actionneur d'embrayage, au moins via un système de débrayage, en particulier pour la réalisation du procédé selon l'une quelconque des revendications 1 à 10, où, pour l'ouverture d'au moins un embrayage, il est prévu une soupape fonctionnant en mode dégradé, **caractérisée en ce que** lors de l'utilisation d'actionneurs d'embrayage électromoteurs, une soupape fonctionnant en mode dégradé est raccordée à un système de débrayage hydrostatique de chaque embrayage, de sorte que lors de l'ouverture de la soupape fonctionnant en mode dégradé, l'embrayage respectivement associé est ouvert avec une force nulle.

12. Boîte de vitesses à double embrayage selon la revendication 11, **caractérisée en ce qu'**il est prévu, comme soupape fonctionnant en mode dégradé, une soupape qui, dans l'état non alimenté en courant, est ouverte.

13. Boîte de vitesses à double embrayage selon l'une ou l'autre des revendications 11 et 12, **caractérisée en ce que** la soupape fonctionnant en mode dégradé est couplée électriquement à la serrure de contact d'allumage, de manière telle que la soupape fonctionnant en mode dégradé soit fermée de façon active lorsque la serrure de contact d'allumage est enclenchée et ouverte lorsque la serrure de contact d'allumage n'est pas enclenchée.

14. Boîte de vitesses à double embrayage selon l'une quelconque des revendications 11 à 13, **caractérisée en ce que** la soupape fonctionnant en mode dégradé est couplée électriquement au calculateur électronique de la boîte de vitesses, de manière telle que la soupape fonctionnant en mode dégradé soit fermée de façon active au cours du fonctionnement du calculateur électronique de la boîte de vitesses et soit ouverte automatiquement lors de la détection d'un défaut du système.

15. Boîte de vitesses à double embrayage selon l'une quelconque des revendications 11 à 14, **caractérisée en ce qu'**il est prévu une soupape fonctionnant en mode dégradé, actionnée au moins mécaniquement pour l'ouverture manuelle de l'embrayage.

16. Boîte de vitesses à double embrayage selon l'une quelconque des revendications 11 à 15, **caractérisée en ce qu'**il est prévu une soupape fonctionnant en mode dégradé, actionnée électriquement pour l'ouverture manuelle de l'embrayage.

17. Boîte de vitesses à double embrayage selon l'une quelconque des revendications 11 à 16, **caractérisée en ce qu'**il est prévu un double embrayage à sec comprenant des embrayages fermés par pression, ouverts avec une force nulle.
